# EUROPEAN PATENT SPECIFICATION

(11) **EP 4 166 006 B1**
(45) Date of publication and mention of the grant of the patent: **19.11.2025**
(21) Application number: 21826331.7
(22) Date of filing: 11.06.2021
(51) Int. Cl.: A23L 13/00, A23L 13/40, A23L 13/60, A23L 23/00, A23L 27/00, A23L 29/10, A23D 7/00, A23D 9/00, A23G 9/32, A21D 2/14, A21D 2/16

(54) **METHOD FOR IMPROVING PERSISTENCE OF FLAVOR OF FOOD/BEVERAGE PRODUCT**
VERFAHREN ZUR VERBESSERUNG DER BESTÄNDIGKEIT DES GESCHMACKS EINES LEBENSMITTEL-/GETRÄNKPRODUKTS
PROCÉDÉ D'AMÉLIORATION DE LA PERSISTANCE DE L'ARÔME D'UN PRODUIT ALIMENTAIRE/BOISSON

(30) Priority: 15.06.2020 JP 2020102915
(43) Date of publication of application: 19.04.2023
(73) Proprietor: The Nisshin OilliO Group, Ltd., Tokyo 104-8285 (JP)
(72) Inventor: ITO, Tomoya, Yokohama-shi, Kanagawa 235-8558 (JP); TSUJINO, Shogo, Yokohama-shi, Kanagawa 235-8558 (JP); AOYAGI, Kanji, Yokohama-shi, Kanagawa 235-8558 (JP); FUSHIMI, Tatsuya, Yokohama-shi, Kanagawa 235-8558 (JP); MURAYAMA, Noriko, Yokohama-shi, Kanagawa 235-8558 (JP); HASOME, Yoshimune, Yokohama-shi, Kanagawa 235-8558 (JP); TSUKIYAMA, Muneo, Yokohama-shi, Kanagawa 235-8558 (JP); UEHARA, Hidetaka, Yokohama-shi, Kanagawa 235-8558 (JP); MIZOTA, Toshinobu, Yokohama-shi, Kanagawa 230-8504 (JP)
(74) Representative: Becker, Eberhard
(86) International application number: PCT/JP2021/022303
(87) International publication number: WO 2021/256394

(56) References cited:
- JP-A- 2002 000 231
- JP-A- 2006 020 549
- JP-A- 2015 211 697
- JP-A- 2016 002 051
- JP-A- S6 322 143
- JP-A- S61 152 240
- JP-A- S61 152 243
- KIM GUR-YOO ET AL: "Microencapsulation of Caramel Flavor and Properties of Ready-to-drink Milk Beverages Supplemented with Coffee Containing These Microcapsules", vol. 39, no. 5, 1 October 2019 (2019-10-01), pages 780 - 791, XP093094728, ISSN: 2636-0772, Retrieved from the Internet <URL:http://www.kosfaj.org/download/download_pdf?doi=10.5851/kosfa.2019.e68> DOI: 10.5851/kosfa.2019.e68

## Description

### [Technical Field]

The present disclosure relates to a method for improving the persistence of flavor of a food and beverage product in the mouth.

### [Background Art]

Highly palatable food products generally have a unique flavor. For example, there are various types of cheese, such as processed cheese with little distinctiveness and blue cheese with a unique strong flavor. However, cheeses with unique flavors are generally expensive. Therefore, low-cost food products imitating expensive and highly palatable food products have been developed. Low-cost food products contain a small amount of expensive and highly palatable ingredients in many cases, or use flavors that are close to the flavors of expensive and highly palatable ingredients. Through the efforts of food developers, low-cost food products that are even more popular than the real food have been developed. However, in many cases, low-cost food products lack flavor and texture. Flavors, in particular, tend to disappear upon the low-cost food products being placed in the mouth.

In order to improve the persistence of flavor in the mouth, various emulsified flavoring agents have been developed by emulsifying oil-soluble flavors and dispersing them in water (for example, Patent Literature 1). However, emulsified flavoring agents tend to weaken the flavor expression of the flavor itself.

### [Citation List]

### [Patent Literature]

### [Patent Literature 1]

Japanese Patent Laid-Open No. 9-111284

### [Journal Literature]

KIM GUR-YOO ET. AL.: "Microencapsulation of Caramel Flavor and Properties of Ready-to-drink Milk Beverages Supplemented with Coffee Containing These Microcapsules", FOOD SCIENCE OF ANIMAL RESOURCES, vol. 39, no. 5, 1 October 2019 (2019-10-01), pages 780-791, XP093094728. KIM ET. AL. describes a coffee-containing milk beverage composition comprising microencapsulated caramel flavor in prolonging flavor retention of coffee beverages during storage.

### [Summary of Invention]

### [Technical Problem]

Therefore, for example, in food and beverage products that contain a small amount of expensive and highly palatable ingredients, or of which flavor is adjusted by flavoring agents, flavoring materials, or the like, in order to increase the satisfaction when eating and drinking food and beverage products, a method for improving the persistence of flavor upon placing a food and beverage product in the mouth has been desired.

An objective of the present disclosure is to develop a method for improving the persistence of flavor upon placing a food and beverage product in the mouth.

### [Solution to Problem]

The present inventors have made intensive studies to solve the above problems. As a result, it was found that, by incorporating polyglycerol polyricinoleate in the food and beverage product, the persistence of flavor upon placing a food and beverage product in the mouth was improved. Accordingly, the present invention has been completed. That is, the present invention covers the following aspects.

[1] Use of polyglycerol polyricinoleate for improving the persistence of flavor of a food and beverage product.
[2] The use according to [1], in which a degree of polymerization of the polyglycerin in the polyglycerol polyricinoleate is 2 to 10.
[3] The use according to [1] or [2], in which the food and beverage product has a sweet and/or salty flavor.
[4] The use according to any one of [1] to [3], in which the food and beverage product contains an edible oil and fat.
[5] The use according to [4], in which the food and beverage product is an emulsion.
[6] The use according to [4] or [5], in which polyglycerol polyricinoleate is applied to the edible oil and fat contained in the food and beverage product.
[7] The use according to [6], in which a value obtained by dividing a decrease (mN/m) in interfacial tension against water by a content (% by mass) of polyglycerol polyricinoleate is 30 to 200 (mN/m/% by mass), the decrease is obtained by subtracting a value of the interfacial tension against water in the edible oil and fat containing polyglycerol polyricinoleate from a value of the interfacial tension against water in an edible oil and fat without polyglycerol polyricinoleate, the content of polyglycerol polyricinoleate is 0.01 to 0.5% by mass in the food and beverage product, and the value of the interfacial tension against water is obtained 120 seconds after the start of measurement is stable at 37°C.

### [Advantageous Effects of Invention]

According to the present invention, it is possible to provide an use of polyglycerol polyricinoleate for improving the persistence of flavor of a food and beverage product.

The present invention will be exemplified in detail below. In the present disclosure, A (numerical value) to B (numerical value) mean A or more and B or less. It should be noted that preferable aspects, more preferable aspects, and the like exemplified below can be used in combination with each other as appropriate regardless of expressions such as "preferable" and "more preferable". In addition, the description of the numerical range is an example, and regardless of expressions such as "preferably" and "more preferably", ranges obtained by appropriately combining the upper and lower limits of respective ranges and the numerical values in Examples can also be preferably used.

The agent for improving the persistence of flavor that improves the persistence of flavor upon placing the food and beverage product of the present disclosure in the mouth uses polyglycerol polyricinoleate (hereinafter referred to as PGPR in some cases) as an effective ingredient. Methods for producing polyglycerol polyricinoleate are known, and for example, polyglycerol polyricinoleate is obtained by an esterification reaction between ricinoleic acid, which is mainly obtained from castor oil, and polyglycerin. The polyglycerin part of the polyglycerol polyricinoleate is a mixture of polyglycerols with different numbers of polymerized glycerols (degree of polymerization), and can be referred to as an average degree of polymerization. The average degree of polymerization of polyglycerin can be calculated, for example, from the hydroxyl value of the mixture. The average degree of polymerization of the polyglycerin part of the polyglycerol polyricinoleate contained as an effective ingredient in the agent for improving the persistence of flavor of the present disclosure is preferably approximately 2 to 10, more preferably approximately 2 to 8, and further preferably approximately 3 to 6.

As the polyglycerol polyricinoleate contained in the agent for improving the persistence of flavor of the present disclosure, a commercially available product may be used. As the commercially available products, for example, SY Glyster CR-310, CR-500, CR-ED, CRS-75 and the like manufactured by Sakamoto Yakuhin Kogyo Co., Ltd., Sunsoft No.818DG, 818R, 818SK, 818H manufactured by Taiyo Kagaku Co. Ltd., and POEM PR-300 and the like manufactured by Riken Vitamin Co., Ltd. can be used as appropriate. Polyglycerol polyricinoleates may be used in combination of two or more.

The content of the polyglycerol polyricinoleate contained in the agent for improving the persistence of flavor of the present disclosure may be selected preferably from 10% by mass or more, 20% by mass or more, 30% by mass or more, 40% by mass or more, 50% by mass or more, 60% by mass or more, 70% by mass or more, and 80% by mass or more. In addition, the upper limit of the content of the polyglycerol polyricinoleate contained in the agent for improving the persistence of flavor of the present disclosure may be selected preferably from 100% by mass or less, 99% by mass or less, 98% by mass or less, 97% by mass or less, 95% by mass or less, 90% by mass or less, and 85% by mass or less. The lower limit and upper limit of the content of the polyglycerol polyricinoleate contained in the agent for improving the persistence of flavor of the present disclosure may be combined in any manner. However, the content of the polyglycerol polyricinoleate contained in the agent for improving the persistence of flavor of the present disclosure is preferably 10 to 100% by mass, more preferably 30 to 100% by mass, still more preferably 50 to 100% by mass, further more preferably 70 to 100% by mass, even more preferably 80 to 100% by mass, and most preferably 90 to 100% by mass. In addition to polyglycerol polyricinoleate, which is an effective ingredient, the agent for improving the persistence of flavor of the present disclosure may contain other emulsifiers, oils and fats, and fine powders for easily dispersing/dissolving the polyglycerol polyricinoleate in a food and beverage product.

In the food and beverage product containing the agent for improving the persistence of flavor of the present disclosure, the flavor of the food and beverage product upon the food and beverage product being placed in the mouth may be more persistent compared to a food and beverage product that does not contain the agent for improving the persistence of flavor. The food and beverage product to which the agent for improving the persistence of flavor of the present disclosure can be applied is not particularly limited. However, since the persistence of flavor upon the food and beverage product being placed in the mouth is improved, improvement in palatability can be expected for a food and beverage product with a preferable flavor. The amount of the agent for improving the persistence of flavor of the present disclosure to be used in a food and beverage product is not constant because the optimum amount differs depending on the type of food and beverage product. The agent for improving the persistence of flavor may be used in an optimum amount for each food and beverage product to be used. However, regarding a guideline for the content of the agent for improving the persistence of flavor of the present disclosure contained in food and beverage products, the lower limit of polyglycerol polyricinoleate which is an effective ingredient is preferably any of 1 ppm by mass or more, 5 ppm by mass or more, 10 ppm by mass or more, 20 ppm by mass or more, 30 ppm by mass or more, 40 ppm by mass or more, 50 ppm by mass or more, 70 ppm by mass or more, and 90 ppm by mass or more. In addition, the upper limit may be any of 10000 ppm by mass or less, 7000 ppm by mass or less, 5500 ppm by mass or less, 3000 ppm by mass or less, 1100 ppm by mass or less, 700 ppm by mass or less, 550 ppm by mass or less, 400 ppm by mass or less, and 300 ppm by mass or less. The lower limit and upper limit may be combined in any manner. In addition, the content of the polyglycerol polyricinoleate contained in the food and beverage product is preferably 1 to 10,000 ppm by mass, more preferably 5 to 5500 ppm by mass, still more preferably 10 to 1100 ppm by mass, further more preferably 20 to 1000 ppm by mass, even more preferably 20 to 550 ppm by mass, and most preferably 30 to 300 ppm by mass.

According to one aspect of the present disclosure, the food and beverage product containing the agent for improving the persistence of flavor of the present disclosure has a sweet flavor. The sweet flavor is preferably a sweet flavor of sugar. Sugars are carbohydrates excluding dietary fiber. The sugar is not particularly limited as long as it has a sweet flavor. Examples of sugars include: saccharides such as sucrose (sugar and powdered sugar), lactose, glucose, fructose, maltose, xylose, trehalose, oligosaccharide, raffinose, honey, starch syrup, liquid sugar, enzyme-converted starch syrup, sucrose-bound starch syrup, isomerized liquid sugar, and dextrin; and sugar alcohols such as reduced starch saccharification products, reduced sugar polydextrose, sorbitol, reduced lactose, Palatinit, xylitol, maltitol, erythritol, and mannitol. The sweet flavor may also be a non-sugar sweet flavor. Examples of non-sugar sweeteners include natural sweeteners such as Stevia, thaumatin, licorice extract, and monk fruit extract; and artificial sweeteners such as acesulfame K, aspartame, and sucralose.

According to one aspect of the present disclosure, the food and beverage product containing the agent for improving the persistence of flavor of the present disclosure has a salty flavor. The salty flavor is preferably a salty flavor of table salt. Examples of table salt include refined salt, solar salt, natural salt, and rock salt. Moreover, according to one aspect of the present disclosure, the food and beverage product containing the agent for improving the persistence of flavor of the present disclosure has a sweet flavor and a salty flavor.

According to one aspect of the present disclosure, the food and beverage product containing the agent for improving the persistence of flavor of the present disclosure has a flavoring agent. Here, the sugar and table salt themselves described above are excluded from the flavoring agents. Examples of flavoring agents include: milk flavoring agents such as whole milk powder, skimmed milk powder, fresh cream, concentrated milk, fermented milk, condensed milk, yogurt, and cheese; egg yolk flavoring agents such as egg yolk powder and sweetened egg yolk; chocolate flavoring agents such as cocoa powder and cacao paste: various seeds, fruits, beans, herbs, other edible plants, and processed products thereof such as matcha, strawberry powder, soy milk, coconut milk, and green juice; and seasonings such as soy sauce, miso, vinegar, spices, and umami seasonings. However, the flavoring agent does not include butter or the like that contains 80% by mass or more of oils and fats. Butter or the like is treated as an edible oil and fat, which will be described later. The flavoring agent is preferably one or more selected from a milk flavoring agent, an egg yolk flavoring agent, and a chocolate flavoring agent.

Polyglycerol polyricinoleate, which is an effective ingredient of the agent for improving the persistence of flavor of the present disclosure, is generally oil-soluble, and thus the agent for improving the persistence of flavor of the present disclosure may be suitably used for oil and fat-containing food and beverage products. The oil and fat-containing food and beverage product in which the agent for improving the persistence of flavor of the present disclosure can be suitably used is not particularly limited. Examples of oil and fat-containing food and beverage products include food products containing substantially no water, such as chocolate, sugar cream, olive oil, coconut oil, and sesame oil. Here, containing substantially no water means that the water content in the food and beverage product is preferably 0 to 3% by mass, more preferably 0 to 2% by mass, and still more preferably 0 to 1% by mass. However, the oil and fat-containing food and beverage product is preferably an emulsion. Emulsions are not particularly limited. However, the emulsion is preferably a water-in-oil emulsion or an oil-in-water emulsion. Examples of water-in-oil emulsions include margarine, fat spread, and butter cream. Examples of oil-in-water emulsions include mayonnaise, whipped cream, and ice cream.

According to one aspect of the present invention, the oil and fat-containing food and beverage product containing the agent for improving the persistence of flavor of the present disclosure may be an edible oil and fat. Oils and fats contained in an edible oil and fat are not particularly limited as long as they are edible. Examples thereof include: various vegetable and animal oils/fats such as soybean oil, rapeseed oil, rice oil, sunflower oil, safflower oil, olive oil, canola oil, corn oil, cottonseed oil, sesame oil, palm oil, palm kernel oil, coconut oil, cocoa butter, peanut oil, hazelnut oil, macadamia nut oil, milk fat, beef tallow, and lard; and processed oils and fats obtained by subjecting these to one or more treatments selected from hydrogenation, fractionation, and transesterification. One or two or more types of these oils and fats may be used. However, the edible oils/fats preferably include lightly distilled or undistilled oils and fats. Lightly distilled or undistilled oils and fats have a stronger inherent flavor of oils and fats. Here, light distillation is distillation performed at a temperature of 150°C or less. Light distillation is preferably performed at a temperature of 140°C or less, and more preferably 130°C or less. Distillation applied to the edible oil and fat is preferably steam distillation applied in the deodorization process of oils and fats refining. Lightly distilled or undistilled oils and fats are not particularly limited as long as they are edible. However, examples of lightly distilled or undistilled oils and fats preferably include milk fat, lard, beef tallow, olive oil, coconut oil, cocoa butter, sesame oil, nut oils, and various roasted oils and fats. Examples of nut oils include peanut oil, hazelnut oil, macadamia nut oil, almond nut oil, and pistachio nut oil. Roasted oils and fats are oils and fats obtained by pressing or the like from roasted oil raw materials. Examples of roasted oils and fats include roasted sesame oil, roasted rapeseed oil (rapeseed red water), roasted safflower oil, and various roasted nut oils. However, the edible oil and fat preferably contains one or more selected from olive oil, roasted sesame oil, and nut oil. The content of the lightly distilled or undistilled oils and fats contained in the edible oil and fat is not particularly limited. However, the proportion of the net oils and fats part is preferably 1 to 100% by mass, more preferably 20 to 100% by mass, still more preferably 40 to 100% by mass, and most preferably 65 to 100% by mass. The edible oil and fat also preferably includes animal oils/fats. The degree of refinement of the animal oil and fat is not particularly limited as long as it is edible. However, the animal oil and fat is preferably an oil and fat distilled at a temperature above 150°C. The distillation is preferably steam distillation. The content of animal oil and fat contained in the edible oil and fat is not particularly limited. However, the proportion of the net oils and fats part is preferably 1 to 100% by mass, more preferably 20 to 100% by mass, still more preferably 40 to 100% by mass, and most preferably 65 to 100% by mass.

According to one aspect of the present disclosure, the edible oil and fat preferably contains olive oil as a lightly distilled or undistilled oil and fat. Examples of olive oil include unrefined olive oil such as extra virgin olive oil, virgin olive oil, and ordinary virgin olive oil. The names of the above olive oils are based on the standards established by the International Olive Council. Unrefined olive oil preferably has an acidity of 3.3 or less. Unrefined olive oil is preferably flavorful extra virgin and/or virgin olive oil, more preferably extra virgin olive oil. Unrefined olive oil can be produced by pulverizing and agitating sorted and washed olive fruits to separate the oil and the pomace. For the separation, the currently mainstream "centrifugation method" or the old traditional "pressing method" may be used. Unrefined olive oil is olive oil that has not undergone deacidification treatment, decolorization treatment, or deodorization treatment, although impurities are removed by filtration or the like, as necessary.

According to one aspect of the present disclosure, the edible oil and fat preferably contains roasted sesame oil as a lightly distilled or undistilled oil and fat. Methods for producing roasted sesame oil are known. Roasted sesame oil can be obtained, for example, by selecting raw material seeds, and then performing roasting, then pressing, filtering, standing, repeating filtration and standing, and finishing filtration. At this time, the flavor is adjusted by adjusting the degree of roasting. Roasted sesame oil preferably has a Lovibond colorimetric value (25.4 mm cell) of 130 to 350 (more preferably, 150 to 330). Here, the Lovibond colorimetric value (25.4 mm cell) can be obtained by fitting numbers of Y, R, and B, which are measured based on the Lovibond method (Japan Oil Chemists' Society, Standard Oil and Fat Analysis Test Method 2.2.1.1), to the following formula.
Lovibond colorimetric value (25.4 mm cell) = Y + 10 x R + 10 x B
Y: Number on the yellow slide
R: Number on the red slide
B: Number on the blue slide

According to one aspect of the present disclosure, the edible oil and fat preferably contains nut oil as a lightly distilled or undistilled oil and fat. Nut oils are oils extracted from nuts, and examples thereof include hazelnut oil, macadamia nut oil, almond oil, peanut oil, pistachio oil, cashew oil, brazil nut oil, pecan nut oil, walnut oil, and pine nut oil. Two or more types of nut oils may be used. The nut oil is preferably one or more selected from hazelnut oil, macadamia nut oil, almond oil, pistachio oil, and peanut oil, and more preferably one selected from hazelnut oil, macadamia nut oil, and pistachio oil. The nut oil may be roasted nut oil obtained from roasted nuts.

According to one aspect of the present disclosure, when a strong flavor is required, such as for raw food, the content of lightly distilled or undistilled oils and fats contained in an edible oil and fat is preferably 16 to 100% by mass, more preferably 31 to 100% by mass, still more preferably 51 to 100% by mass, and even more preferably 65 to 100% by mass. However, for example, when a moderately fragrant flavor, a faint flavor, or a flavor that is not strong is required, for cooking with heat or the like, the content of lightly distilled or undistilled oils and fats is preferably 0.01 to 50% by mass, more preferably 0.1 to 30% by mass, still more preferably 0.5 to 20% by mass, even more preferably 1 to 15% by mass, and most preferably 2 to 12% by mass %. In addition, according to one aspect of the present disclosure, the persistence of flavor of an edible oil and fat containing PGPR upon being placed in the mouth is improved. Therefore, even when the content of lightly distilled or undistilled oils and fats is reduced by approximately 2/3 to 1/2, by incorporating PGPR, the same level of flavor expression as before the reduction of the content can be expected. That is, a secondary effect is obtained in that the amount of lightly distilled or undistilled oils and fats to be used, which have excellent flavor but are relatively expensive, can be reduced.

According to one aspect of the present disclosure, the interfacial tension against water in an edible oil and fat containing an agent for improving the persistence of flavor as an effective ingredient at a concentration of 0.01 to 0.5% by mass decreases (deteriorates) compared to a state where no effective ingredient is contained. Then, the value (interfacial tension index: mN/m/% by mass) obtained by dividing this decrease (mN/m) by the effective ingredient content (% by mass) is preferably approximately 30 to 200, and more preferably approximately 40 to 180. Although the present disclosure is not influenced by theory, the value obtained by dividing the interfacial tension against water, which is reduced due to incorporation of the effective ingredient, by the content of the effective ingredient is set to approximately 30 to 220, thereby improving affinity of taste components to the tongue. As a result, it is presumed that the persistence of flavor upon being placed in the mouth is improved. The measured value of interfacial tension against water is suitable since the numerical value obtained 120 seconds after the start of measurement is stable preferably at 37°C.

When the oil and fat-containing food and beverage product containing the agent for improving the persistence of flavor of the present disclosure is an edible oil and fat, the edible oil and fat may contain a flavor (flavoring agent). Flavors are not particularly limited. However, oil-soluble flavors are preferable. Examples of flavors include various flavors such as vanilla, strawberry, milk, butter, green tea, coffee, orange, grape, banana, mint, lemon, and lard. However, butter flavor, vanilla flavor, and pork flavor are preferable. The content of the flavor in the edible oil and fat is preferably 0.001 to 3% by mass, more preferably 0.01 to 2% by mass, and still more preferably 0.05 to 1% by mass.

When the oil and fat-containing food and beverage product containing the agent for improving the persistence of flavor of the present disclosure is an edible oil and fat, the content of the polyglycerol polyricinoleate contained in the edible oil and fat is not particularly limited. However, the lower limit of the content of polyglycerol polyricinoleate contained in an edible oil and fat is preferably any of 1 ppm by mass or more, 5 ppm by mass or more, 10 ppm by mass or more, 20 ppm by mass or more, 30 ppm by mass or more, 40 ppm by mass or more, 50 ppm by mass or more, 70 ppm by mass or more, and 90 ppm by mass or more. In addition, the upper limit may be any of 50000 ppm by mass or less, 20000 ppm by mass or less, 10000 ppm by mass or less, 7000 ppm by mass or less, 5500 ppm by mass or less, 3000 ppm by mass or less, 1100 ppm by mass or less, 700 ppm by mass or less, 550 ppm by mass or less, 400 ppm by mass or less, and 300 ppm by mass or less. The lower limit and upper limit may be combined in any manner. In addition, the content of the polyglycerol polyricinoleate contained in the edible oil and fat is preferably 1 to 10000 ppm by mass, more preferably 5 to 5500 ppm by mass, still more preferably 10 to 1100 ppm by mass, further more preferably 20 to 550 ppm by mass, and even more preferably 30 to 300 ppm by mass. However, according to one aspect of the present disclosure, when the edible oil and fat is used for raw (unheated) applications, the content of PGPR contained in the edible oil and fat is preferably 10 to 1000 ppm by mass, more preferably 40 to 600 ppm by mass, still more preferably 60 to 460 ppm by mass, and even more preferably 80 to 400 ppm by mass. In addition, when the edible oil and fat is used for heating application, the content of PGPR contained in the edible oil and fat is preferably 300 to 30000 ppm by mass, more preferably 1300 to 13000 ppm by mass, still more preferably 2000 to 8000 ppm by mass, and further more preferably 2500 to 6500 ppm by mass.

According to one aspect of the present disclosure, in the edible oil and fat, additives that are used in ordinary edible oil and fat can be appropriately used in addition to the polyglycerol polyricinoleate, if necessary. Additives are used for the purpose of improving storage stability, improving oxidation stability, improving thermal stability, and suppressing crystal precipitation at low temperatures. Specific examples of additives include polyglycerin fatty acid esters, sucrose fatty acid esters, sorbitan fatty acid esters, vitamin E, ascorbic acid fatty acid esters, lignans, coenzyme Q, plant sterols and derivatives, oryzanol, diglycerides, silicones, tocopherols, lecithins, and coloring agents. However, the content of emulsifiers other than PGPR contained in the edible oil and fat is preferably less than the content of PGPR. The PGPR content is more preferably 2/3 or less or 1/2 or less, and still more preferably 0% by mass. In addition, the edible oil and fat preferably does not contain flavors and/or essence extracts from food materials. The content of additives other than PGPR in the edible oil and fat is preferably 0 to 3% by mass, more preferably 0 to 2% by mass, and still more preferably 0 to 1% by mass.

According to one aspect of the present disclosure, the oil and fat-containing food and beverage product containing the agent for improving the persistence of flavor of the present disclosure may be an aspect containing an edible oil and fat containing the agent for improving the persistence of flavor of the present disclosure. The proportion of the edible oil and fat in oils and fats other than the oils and fats contained in the oil-containing food material contained in the oil and fat-containing food and beverage product is preferably 1 to 100% by mass, more preferably 40 to 100% by mass, and still more preferably 65 to 100% by mass. However, the content of PGPR in the total oils and fats contained in the oil and fat-containing food and beverage product (containing the oils and fats contained in the oil-containing food material) may be preferably adjusted to be within the range of the content of PGPR contained in the edible oil and fat in paragraph 0026 above.

The oil and fat-containing food and beverage product in the aspect containing the edible oil and fat containing the agent for improving the persistence of flavor of the present disclosure is not particularly limited as long as it contains the edible oil and fat containing the agent for improving the persistence of flavor of the present disclosure. According to one aspect of the present disclosure, the edible oil and fat containing the agent for improving the persistence of flavor of the present disclosure is used as frying oil or cooking oil, and can be suitably used for cooking with heat such as fried food or deep-fried food (for example, deep-fried food without breading or batter, deep-fried chicken, fried food, fritter, and tempura). Specific examples of heat-cooked food products include deep-fried food without breading or batter, deep-fried chicken, Tatsuta fried chicken, cutlet, croquette, fried food, nugget, fritter, tempura, donut, rice cracker, rice biscuit, bread, biscuit, cracker, cookie, pretzel, corn chips, corn puffs, cornflakes, popcorn, potato chips, nuts, butternut peanuts, and snack food.

The edible oil and fat containing the agent for improving the persistence of flavor of the present disclosure can also be suitably used for food coating. Examples of methods for coating food products with the edible oil and fat containing the agent for improving the persistence of flavor of the present disclosure include methods such as coating (for example, spraying, and brushing) and pickling (immersion). However, the coating method can be appropriately selected according to the characteristics of the food product to be coated. Coating can be used, for example, to finish heat-cooked food products which are baked or fried. Moreover, the heat-cooked food products, which are coated in an unheated state can also be heat-treated in an oven or the like. The edible oil and fat containing the agent for improving the persistence of flavor of the present disclosure can be used without particular limitations as long as they are food products that conventionally use coating oils and fats. However, the edible oil and fat can be suitably used especially for snacks. Snacks mainly mean snack food such as rice crackers, rice biscuits, biscuits, crackers, pretzels, cookies, corn puffs, corn flakes, popcorn, potato chips and nuts. However, any confectionery and bakery food product such as confectionery, cakes, and bread, which have been coated with conventional oils and fats, are classified as snacks regardless of their type. For example, pizzas, pies, cakes, cereals, and the like are also snacks.

The edible oil and fat containing the agent for improving the persistence of flavor of the present disclosure is also processed into plastic oil and fat compositions such as shortening and margarine to be suitably used for dough folding or dough kneading in confectionery and bakery product such as bread (for example, plain bread, sweet buns, croissants, and Danish pastries), and baked confectionery (for example, cookies, biscuits, cakes, and pies). Examples of confectionery and bakery food products using edible oil and fat containing the agent for improving the persistence of flavor of the present disclosure for the dough include breads (plain bread, table rolls, sweet buns, cooked bread, French bread, rye bread, and the like), yeast confectionery (Stollen, panettone, gugelhupf, brioche, donuts, and the like), pastries (Danish, croissants, pies, and the like), cakes (butter cakes, sponges, biscuits, cookies, donuts, bouchee, hot cakes, waffles, Baumkuchen, and the like), Japanese sweets (manju, sweet made with milk, steamed bread, castella buns, Dorayaki, and the like), noodles (udon, soba, Chinese noodles, pasta, and the like), and dim sum (dumplings, shumai, manju, wontons, spring rolls, and the like).

The edible oil and fat containing the agent for improving the persistence of flavor of the present disclosure can also be suitably used as oils and fats contained in edible creams. One of the preferable aspects of the edible cream is anhydrous cream, which is made by kneading at least oils and fats and saccharides, and which does not contain water. Anhydrous creams can be used as they are or after foaming as appropriate, for example, as coating creams, sandwich creams, and filling creams. Another preferable aspect includes an emulsified water-containing cream containing at least oils and fats and water. The water-containing cream may be any emulsified type such as O/W type, W/O type, and complex emulsified type. The so-called whipped cream, which is an O/W type water-containing cream and is used in a foamed state, is obtained by blending and foaming saccharide, or by foaming sweetened whipped cream previously blended with saccharide, and thus the whipped cream can be used as, for example, coating cream, sandwich cream, or filling cream. In addition, a beverage cream added to beverages such as coffee and used, or a cooking cream added to sauces and roux and used, a bakery cream used by kneading into confectionery and bakery dough, a frozen-dessert kneading cream used by kneading into frozen desserts such as ice cream and pudding, or the like, which is the O/W type water-containing cream, is also one of the preferable aspect of the edible cream. Also, so-called flour paste, which is an O/W type water-containing cream and further contains starch (including starch contained in cereal flour) and is given a body by heating and gelatinizing the starch, is also one of the preferable aspects of the edible cream. In addition, a butter cream which is a W/O type water-containing cream and obtained by blending a W/O type plastic oil and fat composition used as a spread or for confectionery and bakery with saccharides such as liquid sugar by foaming the W/O type plastic oil and fat composition, or obtained by blending and foaming saccharides such as liquid sugar with a W/O type plastic oil and fat composition, is also one of the preferable aspects of the edible cream. Furthermore, an edible cream (butter cream), which is obtained by foaming an anhydrous plastic oil and fat composition (so-called shortening) and blending it with liquid saccharide, or obtained by blending liquid saccharide with an anhydrous plastic oil and fat composition and foaming the mixture, is also one of the preferable aspects of the edible cream.

The edible oil and fat containing the agent for improving the persistence of flavor of the present disclosure is also suitable as oils and fats in roux used in processed foods such as curry, stew, hayashi, and white sauce. In general, roux is prepared by heating and mixing wheat flour and oils and fats, and as necessary, by adding and mixing additives such as spices (for example, curry powder), table salt, saccharides, and seasonings. The roux may be any form of solid roux, plastic roux, fluid paste roux, and liquid roux. In addition, the roux may also be a water-containing substance, and the emulsified form may be any of water-in-oil type, oil-in-water type, and double emulsified type. A roux using an edible oil and fat containing the agent for improving the persistence of flavor of the present disclosure can be used in processed foods such as curry, stew, hayashi, and white sauce.

The edible oil and fat containing the agent for improving the persistence of flavor of the present disclosure can also be suitably used in beverages such as coffee-based beverages (for example, milk coffee and cafe au lait), tea-based beverages (for example, milk tea and chai), soy milk, coconut milk, potage, and soup. The edible oil and fat containing the agent for improving the persistence of flavor of the present disclosure can also be suitably used in sugar confectionery such as candy, caramel, bean paste, and sweet bean jelly into which the edible oil and fat is kneaded. The edible oil and fat containing the agent for improving the persistence of flavor of the present disclosure can also be suitably used for canned, bottled, and retort foods in which meat, fish, fruits, vegetables, and processed products thereof are packed in cans, bottles, pouches, and the like. The edible oil and fat containing the agent for improving the persistence of flavor of the present disclosure can also be suitably used in processed meat foods such as hamburgers, quenelle, meatballs, meatloaf, shumai ingredients, gyoza ingredients, meat bun ingredients, Tsukune, hams, sausages, or the like, or meat-like processed foods in which a part or all of the meat is substituted with vegetable protein.

The food and beverage product containing the agent for improving the persistence of flavor of the present disclosure can be produced by conventionally known methods for each food and beverage product, except that the agent for improving the persistence of flavor of the present disclosure is contained.

### [Description of Embodiments]

The present disclosure will now be described in more detail by Example. However, the present disclosure should not be construed as being limited to the content of the following examples.

### <Screening of Emulsifier>

### (Preparation of Emulsifier)

The following emulsifiers were prepared.
Monoglycerin fatty acid ester
   · Monoglycerol oleate (trade name: Sunsoft O-30V, abbreviation: O-30V, manufactured by Taiyo Kagaku Co., Ltd.)
Monoglycerin organic acid ester
   · Glyceryl monooleate succinate (trade name: Sunsoft No.683CB, abbreviation: No.683CB, manufactured by Taiyo Kagaku Co., Ltd.)
   · Glyceryl monooleate citrate (trade name: Sunsoft No.623M, abbreviation: No.623M, manufactured by Taiyo Kagaku Co., Ltd.)
Sorbitan fatty acid ester
   · Sorbitan monooleate (trade name: Sunsoft No.818S, abbreviation: No.81S, manufactured by Taiyo Kagaku Co., Ltd.)
Sucrose fatty acid ester
   · Sucrose erucate (trade name: RYOTO Sugar Ester ER-290. abbreviation: ER-290, manufactured by Mitsubishi Chemical Foods Corporation) Propylene glycol fatty acid ester
   · Propylene glycol monooleate (trade name: Sunsoft No.25-ODV, abbreviation: No.25-ODV. manufactured by Taiyo Kagaku Co., Ltd.)
Polyglycerin fatty acid ester
   · Decaglycerin decaoleate (trade name: RYOTO Polyglyester O-50D, abbreviation: O-50D, Mitsubishi Chemical Foods Corporation)
   · Decaglycerin decaoleate (trade name: Sunsoft Q-1710U, abbreviation: Q-1710U, manufactured by Taiyo Kagaku Co., Ltd.)
   · Pentaglycerin trioleate (trade name: Sunsoft A-173E, abbreviation: A-173E, manufactured by Taiyo Kagaku Co., Ltd.)
   · Diglycerin monooleate (trade name: Sunsoft Q-17D: abbreviation: Q-17D, manufactured by Taiyo Kagaku Co., Ltd.)
Polyglycerol polyricinoleate (abbreviation: PGPR)
   · Hexaglycerin condensed ricinoleic acid ester (trade name: SY Glyster CRS-75, abbreviation: CRS-75, manufactured by Sakamoto Yakuhin Kogyo Co., Ltd.)
   · Hexaglycerin condensed ricinoleic acid ester (trade name: POEM PR-300, abbreviation: PR-300, Riken Vitamin Co.. Ltd.)
   · Hexaglycerin condensed ricinoleic acid ester (trade name: Sunsoft 818H, abbreviation: 818H, manufactured by Taiyo Kagaku Co., Ltd.)
   · Pentaglycerin condensed ricinoleic acid ester (trade name: Sunsoft 818R, abbreviation: 818R, manufactured by Taiyo Kagaku Co., Ltd.)
   · Tetraglycerin condensed ricinoleic acid ester (trade name: Sunsoft 818DG, abbreviation: 818DG, manufactured by Taiyo Kagaku Co., Ltd.)
   · Triglycerin condensed ricinoleic acid ester (trade name: Sunsoft 818JC, abbreviation: 818JC, manufactured by Taiyo Kagaku Co., Ltd.)

### (Preparation of Flavored Oil and fat Containing Emulsifier)

0.20 g of each emulsifier was weighed into a 1 L beaker. In each beaker, soybean oil (manufactured by Nisshin OilliO Group Co., Ltd.) containing 0.1% by mass of pork flavor (trade name: Backaroma Pork Oil CS1283, manufactured by Ogawa & Co., Ltd.) heated to 60°C was added until the total amount reached 500 g and used as a sample for evaluation. Samples for each evaluation contain 400 ppm by mass of each emulsifier.

### (Evaluation of Flavored Oil and fat Containing Emulsifier)

Soybean oil containing 0.1% by mass flavor without any emulsifier served as a control. According to the following evaluation criteria, five panelists skilled in evaluating the flavor of food products containing oils and fats rated the flavor of the samples for evaluation upon the samples being placed in the mouth. The evaluation sample was comprehensively evaluated based on the total score. The results are shown in Table 1.

| Evaluation criteria | Score |
|---|---|
| Pork flavor is stronger andmore persistent compared to the control | 2 points |
| Pork flavor is more persistentcompared to the control | 1 point |
| No change from the control | 0 points |
| Pork flavor is felt weaker than the control | -1 point |

| Comprehensive evaluation | |
|---|---|
| ⊚: 8 points or more | Extremely excellent flavor persistence |
| O: 5 points or more and 7 points or less | Excellent flavor persistence |
| Δ: 2 points or more and 4 points or less | Difficult to discern the difference from the control |
| X: 1 point or less | No difference from the control |

**[Table 1]**

| Table 1. Preliminary evaluation results of emulsifiers | | |
|---|---|---|
| Emulsifier | | Evaluation results |
| Monoglycerin fatty acid ester | | |
| | O-30V | X |
| Monoglycerin organic acid ester | | |
| | No.683CB | X |
| | No.623M | X |
| Sorbitan fatty acid ester | | |
| | No.81S | X |
| Sucrose fatty acid ester | | |
| | ER-290 | X |
| Propylene glycol fatty acid ester | | |
| | No.25-ODV | X |
| Polyglycerin fatty acid ester | | |
| | O-50D | X |
| | Q-1710U | X |
| | A-173E | X |
| | Q-17D | X |
| Polyglycerol polyricinoleate | | |
| | CRS-75 | 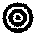 |
| | PR-300 | 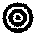 |
| | 818H | 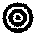 |
| | 818R | 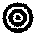 |
| | 818DG | 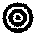 |
| | 818JC | 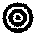 |

### <Evaluation by Frozen Confectionery>

### (Preparation of Oils and Fats for Frozen Confectionery)

Oils and fats for frozen confectionery of Examples 1 to 4 were prepared according to the formulations in Table 2. That is, 85 parts by mass of palm oil intermediate melting point fraction (manufactured by Nisshin OilliO Group Co., Ltd.) and 15 parts by mass of coconut oil (manufactured by Nisshin OilliO Group Co., Ltd.) were heated and mixed, and a mixed oil and fat (oils and fats of Example 1) was prepared. 10 parts by mass of hexaglycerin condensed ricinoleic acid ester (trade name: Sunsoft 818H, abbreviation: 818H, manufactured by Taiyo Kagaku Co., Ltd.) and 90 parts by mass of the mixed oil and fat were heated and mixed, and oils and fats containing 818H at a concentration of 10% by mass were obtained. Oils and fats for frozen confectionery of Examples 2 to 4 were prepared by appropriately diluting the oils and fats containing 818H with the mixed oil and fat.

**[Table 2]**

| Table 2. Fats and oils for frozen confectionery (Values are mass % ) | | | | |
|---|---|---|---|---|
| | Example 1 | Example 2 | Example 3 | Example 4 |
| Mixed oil and fat | 100 | 99.5 | 99.95 | 99.98 |
| 818H | - | 0.5 | 0.05 | 0.02 |
| Total | 100 | 100 | 100 | 100 |

### (Preparation of Oil-in-Water Emulsion for Frozen Confectionery and Frozen Confectionery)

According to the formulation in Table 3, oil-in-water emulsions for frozen confectionery using the oils and fats of Examples 1 to 4 were prepared. That is, the oil-in-water emulsions for frozen confectionery was prepared according to the following production procedures (1) to (4). Then, the prepared oil-in-water emulsions were frozen and foamed using an ice creamer to prepare frozen confectionery (lacto ice) of Examples 5 to 8.
(1) Aqueous phase components other than water were mixed with water to prepare an aqueous phase at 40°C.
(2) The oil phase containing each of the oils and fats of 1 to 4 was added, and the temperature was raised to 80°C while stirring and emulsifying the oil phase.
(3) Then, fine homogenization was performed using a homogenizer.
(4) The obtained emulsion was immersed in ice water, cooled, and then allowed to stand at 7°C for 12 hours or more.

**[Table 3]**

| Raw material name | | Mixing amount (% by mass) |
|---|---|---|
| Oil phase | Each of oils and fats of Examples 1 to 4 | 9 |
| | Monoglyceride | 0.3 |
| Aqueous phase | Skimmed milk powder | 9 |
| | Starch syrup | 5 |
| | Sugar | 15 |
| | Stabilizer | 0.15 |
| | Vanilla flavoring agent | 0.3 |
| | Water | 61.25 |
| Total | | 100 |

### (Flavor Evaluation of Frozen Confectionery)

The lacto ice of Example 5 using the oils and fats for frozen confectionery of Example 1 was used as a control. According to the following evaluation criteria, five panelists skilled in evaluating the flavor of food products containing oils and fats rated the flavor when the lacto ice of Examples 6 to 8 was placed in the mouth. The lacto ices of Examples 6 to 8 were comprehensively evaluated by summing the scores. The results are shown in Table 4.

| Evaluation criteria | Score |
|---|---|
| Favorable milky flavor isstronger and more persistent compared to the control | 2 points |
| Favorable milky flavor ismore persistent compared to the control | 1 points |
| No change from the control | 0 points |
| Flavor is felt more unfavorable compared to control | 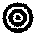 -1 point |

| Comprehensive evaluation | |
|---|---|
| : 8 points or more | Extremely excellent flavor persistence |
| O: 5 points or more and 7 points or less | Excellent flavor persistence |
| Δ: 2 points or more and 4 points or less | Difficult to discern the difference from the control |
| X: 1 point or less | There is no difference from the control, or flavor is unfavorable |

**[Table 4]**

| Table 4. Evaluation results of frozen confectionery | | | | |
|---|---|---|---|---|
| | Example 5 (control) | Example 6 | Example 7 | Example 8 |
| Fats and oils used | Example 1 | Example 2 | Example 3 | Example 4 |
| PGPR content of oils and fats (ppm by mass) | 0 | 5000 | 500 | 200 |
| PGPR content of frozen confectionery (ppm by mass) | 0 | 450 | 45 | 18 |
| Comprehensive evaluation | - | 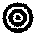 | 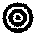 | 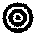 |

### <Evaluation by White Sauce>

### (Preparation of Oils and Fats for White Sauce)

According to the formulation in Table 5, oils and fats for white sauce of Examples 9 to 12 were prepared. That is, 20 parts by mass of unsalted butter (manufactured by Meiji Co., Ltd.) and 80 parts by mass of palm oil (manufactured by Nisshin OilliO Group Co., Ltd.) were heated and mixed, and a mixed oil and fat (oils and fats of Example 9) was prepared. 1 part by mass of hexaglycerin condensed ricinoleic acid ester (trade name: Sunsoft 818H, abbreviation: 818H, manufactured by Taiyo Kagaku Co., Ltd.) and 99 parts by mass of the mixed oil and fat were heated and mixed, and oils and fats containing 818H at a concentration of 1% by mass were obtained. Oils and fats for white sauce of Examples 10 to 12 were prepared by appropriately diluting the oils and fats containing 818H with the mixed oil and fat.

**[Table 5]**

| Table 5. Oils and fats for white sauce (values are % by mass) | | | | |
|---|---|---|---|---|
| | Example 9 | Example 10 | Example 11 | Example 12 |
| Mixed oil and fat | 100 | 99.9 | 99.95 | 99.99 |
| 818H | - | 0.1 | 0.05 | 0.01 |
| Total | 100 | 100 | 100 | 100 |

### (Preparation of White Sauce)

According to the formulation in Table 6, each white sauce of Examples 13 to 16 using each of the oils and fats of Examples 9 to 12 was prepared according to the following production procedures (1) to (4).
(1) The mixed oil and fat was put into a pot and heated, and weak flour was added and fried over low heat.
(2) Milk and table salt were added, and heated while mixing is performed with a wooden spatula to avoid burning.
(3) The wooden spatula is replaced with a whisk, and heating and stirring are further performed.
(4) While straining, the mixture is transferred to a storage container and cooled to room temperature.

**[Table 6]**

| Raw material name | Mixing amount (g) |
|---|---|
| Each of oils and fats of Examples 9 to 12 | 26.5 |
| Weak flour | 26.5 |
| Milk | 444.5 |
| Table salt | 2.5 |
| Total | 500 |

### (Flavor Evaluation of White Sauce)

The white sauce of Example 13 using the oils and fats of Example 9 was used as a control. According to the following evaluation criteria, five panelists skilled in evaluating the flavor of food products containing oils and fats rated the flavor when the white sauce of Examples 14 to 16 was placed in the mouth. The white sauces of Examples 14 to 16 were comprehensively evaluated by summing the scores. The results are shown in Table 7.

| Evaluation criteria | Score |
|---|---|
| Favorable milky flavor isstronger and more persistent compared to the control | 2 points |
| Favorable milky flavor ismore persistent compared to the control | 1 points |
| No change from the control | 0 points |
| Milky flavor is felt more unfavorable compared to control | -1 point |

| Comprehensive evaluation | |
|---|---|
| 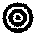 : 8 points or more | Extremely excellent flavor persistence |
| O: 5 points or more and 7points or less | Excellent flavor persistence |
| Δ: 2 points or more and 4points or less | Difficult to discern the difference from the control |
| X: 1 point or less | There is no difference from the control, or flavor is unfavorable |

**[Table 7]**

| Table 7. Evaluation results of white sauce | | | | |
|---|---|---|---|---|
| | Example 13 (Control) | Example 14 | Example 15 | Example 16 |
| Oils and fats used | Example 9 | Example 10 | Example 11 | Example 12 |
| PGPR content of oils and fats (ppm by mass) | 0 | 1000 | 500 | 100 |
| PGPR content of white sauce (ppm by mass) | 0 | 53 | 26.5 | 5.3 |
| Comprehensive evaluation | - | 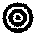 | 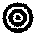 | O |

<Evaluation By Sausage>

### (Preparation of Oils and Fats for Sausage)

Oils and fats for sausage of Examples 17 to 20 were prepared according to the formulations in Table 8. That is, lard (trade name: Miyoshi Pure Lard, manufactured by Miyoshi Oil & Fat Co., Ltd.) was used as oils and fats for sausage of Example 17. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the lard were heated and mixed, and lard containing 818H at a concentration of 5000 ppm by mass (oils and fats for sausage of Example 18) was obtained. In addition, palm oil (trade name: refined palm oil, manufactured by Nisshin OilliO Group Co., Ltd.) was used as oils and fats for sausage of Example 19. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the palm oil were heated and mixed, and palm oil containing 818H at a concentration of 5000 ppm by mass (oils and fats for sausage of Example 20) was obtained.

**[Table 8]**

| Table 8. Oils and fats for sausage (values are % by mass) | | | | |
|---|---|---|---|---|
| | Example 17 | Example 18 | Example 19 | Example 20 |
| Lard | 100 | 99.5 | - | - |
| Palm oil | - | - | 100 | 99.5 |
| 818H | - | 0.5 | - | 0.5 |
| Total | 100 | 100 | 100 | 100 |

### (Preparation of Sausage)

According to the formulation of Table 9, each of the sausages of Examples 21 to 24 using each of the oils and fats of Examples 17 to 20 was prepared according to the following production procedures (1) to (3).
(1) Ingredients are placed in a bowl, cooled with ice water, and stirred with a spatula to form an emulsion.
(2) The desalted sheep intestine is filled with the emulsion not to contain air.
(3) Boiling is performed in hot water at 80°C.

**[Table 9]**

| Raw material name | Mixing amount (% by mass) |
|---|---|
| Each of oils and fats of Example 17 to 20 | 4.90 |
| Minced pork | 78.36 |
| Water | 14.70 |
| Table salt | 1.37 |
| Coloring agent | 0.01 |
| Antioxidant | 0.03 |
| Seasonings | 0.39 |
| Spices | 0.24 |
| Total | 100 |

### (Flavor Evaluation of Sausage)

The sausage of Example 21 using oils and fats of Example 17 served as a control for the sausage of Example 22 using the oils and fats of Example 18. In addition, the sausage of Example 23 using oils and fats of Example 19 served as a control for the sausage of Example 24 using the oils and fats of Example 20. According to the following evaluation criteria, five panelists skilled in evaluating the flavor of food products containing oils and fats rated the flavor when each sausage of Examples 22 to 24 was placed in the mouth. The total score of the sausages of Examples 22 and 24 was evaluated by summing the scores. The results are shown in Table 10.

| Evaluation criteria | Score |
|---|---|
| Umami is felt stronger compared to the control, and has a lingering aftertaste | |
| | 2 points |
| Umami is felt stronger compared to the control | 1 point |
| No change from the control | 0 points |
| Umami is felt weakerpared to the control | -1 point |

| Comprehensive evaluation | |
|---|---|
| 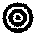 : 8 points or more | Excellent expression of umami and persistence |
| O: 5 points or more and 7points or less | Excellent expression of umami |
| Δ: 2 points or more and 4points or less | Difficult to discern the difference from the control |
| X: 1 point or less | There is no difference from the control, or the expression of umami is weak |

**[Table 10]**

| Table 10. Evaluation results of sausage | | | | |
|---|---|---|---|---|
| | Example 21 (control) | Example 22 | Example 23 (control) | Example 24 |
| Oils and fats used | Example 17 | Example 18 | Example 19 | Example 20 |
| PGPR content of oils and fats (ppm by mass) | 0 | 5000 | 0 | 5000 |
| PGPR content of sausage (ppm by mass) | 0 | 245 | 0 | 245 |
| Comprehensive evaluation | - | 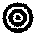 | - | 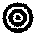 |

### <Evaluation by Vegetable Soup>

### (Preparation of Oils and Fats for Soup)

Oils and fats for soup of Examples 25 to 28 were prepared according to the formulations in Table 11. That is, corn oil (trade name: Nisshin Corn Oil, manufactured by Nisshin OilliO Group Co., Ltd.) was used as the oils and fats for soup in Example 25. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the corn oil were heated and mixed, and corn oil containing 818H at a concentration of 5000 ppm by mass (oils and fats for soup of Example 26) was obtained. In addition, a mixed oil of 10 parts by mass of rapeseed oil deodorized at 140°C (lightly deodorized rapeseed oil, manufactured by Nisshin OilliO Group Co., Ltd.) and 90 parts by mass of the above corn oil was used as oils and fats for soup of Example 27. In addition, 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the oils and fats for soup of Example 27 were heated and mixed, and mixed oil containing 818H at a concentration of 5000 ppm by mass (oils and fats for soup of Example 28) was obtained.

**[Table 11]**

| Table 11. Oils and fats for soup (values are % by mass) | | | | |
|---|---|---|---|---|
| | Example 25 | Example 26 | Example 27 | Example 28 |
| Corn oil | 100 | 99.5 | 90 | 89.55 |
| Lightly deodorized rapeseed oil | - | - | 10 | 9.95 |
| 818H | - | 0.5 | - | 0.5 |
| Total | 100 | 100 | 100 | 100 |

### (Preparation of Vegetable Soup)

According to the formulation in Table 12, each vegetable soups of Examples 29 to 32 using the oils and fats for soup of Examples 25 to 28 were prepared according to the production procedures (1) to (3).
(1) Ginseng was cut into 2 mm quarter slices, and onions were cut vertically into 1 mm wide slices.
(2) Oils and fats, ginseng, and onions were put into a hot pan in order, and fried over low heat for 8 minutes to avoid burning, then water was added and the heat was turned up. After boiling, while boiling again, heating is performed for 60 minutes until the liquid volume is reduced by half. Then, the solids were filtered through a colander to obtain 550 g of vegetable soup.
(3) The finished table salt concentration was set to 0.6% by a salinity concentration meter.

**[Table 12]**

| Raw material name | Mixing amount (g) |
|---|---|
| Each of oils and fats of Example 25 to 28 | 10.0 |
| Ginseng | 50.0 |
| onion | 100.0 |
| Water | 1000.0 |
| Table salt | 3.25 |

### (Flavor Evaluation of Vegetable Soup)

The vegetable soup of Example 29 using the oils and fats for soup of Example 25 was used as a control for the vegetable soups of Examples 30 to 32 using the oils and fats for soup of Examples 26 to 28. According to the following evaluation criteria, five panelists skilled in evaluating the flavor of food products containing oils and fats rated the flavor when each of the vegetable soups of Examples 30 to 32 was placed in the mouth. The vegetable soups of Examples 30 to 32 were comprehensively evaluated by summing the scores. The results are shown in Table 13.

| Evaluation criteria | Score |
|---|---|
| Umami is felt stronger compared to the control, and has a lingering aftertaste | |
| | 2 points |
| Umami is felt strongercompared to the control | 1 point |
| No change from the control | 0 points |
| Umami is felt weakercompared to the control | -1 point |

| Comprehensive evaluation | |
|---|---|
| 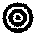 : 8 points or more | Excellent expression of umami and persistence |
| O: 5 points or more and 7 points or less | Excellent expression of umami |
| Δ: 2 points or more and 4 points or less | Difficult to discern the difference from the control |
| X: 1 point or less | There is no difference from the control, or the expression of umami is weak |

**[Table 13]**

| Table 13. Evaluation results of vegetable soup | | | | |
|---|---|---|---|---|
| | Example 29 (control) | Example 30 | Example 31 (control) | Example 32 |
| Oils and fats used | Example 25 | Example 26 | Example 27 | Example 28 |
| PGPR content of oils and fats (ppm by mass) | 0 | 5000 | 0 | 5000 |
| PGPR content of vegetable soup (ppm by mass) | 0 | 90 | 0 | 90 |
| Comprehensive evaluation | - | 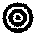 (8 points) | X | 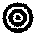 (10 points) |

### <Evaluation by Soft Cookie>

### (Preparation of PGPR-containing Margarine)

Margarines of Examples 33 and 34 were prepared according to the formulation in Table 14. That is, palm oil (trade name: refined palm oil, manufactured by Nisshin OilliO Group Co., Ltd.) was heated, oil-soluble components such as emulsifiers were dissolved, and an oil phase was prepared. In addition, table salt was dissolved in water, and an aqueous phase is prepared. The pre-emulsified product obtained by adding and mixing the water phase to the oil phase was rapidly cooled and kneaded using a combinator, and the margarine of Example 33 containing no PGPR (818H) and the margarine of Example 34 containing 5000 ppm by mass of PGPR (818H) were obtained.

**[Table 14]**

| Table 14. Formulation of margarine | | | |
|---|---|---|---|
| | | Example 33 | Example 34 |
| Raw material name | | Mixing amount (% by mass) | |
| Oil phase | Palm oil | 83.33 | 82.83 |
| | Monoglyceride | 0.4 | 0.4 |
| | Lecithin | 0.07 | 0.07 |
| | 818H | - | 0.5 |
| | β-carotene | Extremely small amount | Extremely small amount |
| Aqueous phase | Table salt | 0.2 | 0.2 |
| | Water | 16.0 | 16.0 |
| Total | | 100 | 100 |

### (Preparation of Soft Cookies)

According to the formulation in Table 15, soft cookies (with chocolate chips) of Examples 35 and 36 were prepared using the margarines of Examples 33 and 34 according to the following production procedures (1) to (6).
(1) Margarine is melted in a hot water bath.
(2) The melted margarine and sugar are mixed.
(3) Vanilla oil and whole egg are added and mixed.
(4) Sifted weak flour, table salt, and baking powder are added and mixed.
(5) Chocolate chips are added and mixed.
(6) Balls of 30 to 35g/piece are rolled and baked in an oven at 180°C for 11 minutes. The soft cookie weight after baking was 96.7% of the dough weight before baking.

**[Table 15]**

| Raw material name | Mixing amount (g) |
|---|---|
| Each margarine of Example 33 and 34 | 120.0 |
| Granulated sugar | 100.0 |
| Light brown sugar | 60.0 |
| Vanilla oil | 0.2 |
| Whole egg (cracked egg) | 50.0 |
| Weak flour (flour) | 190.0 |
| Table salt | 2.5 |
| Baking powder | 2.0 |
| chocolate chip | 150.0 |
| Total | 674.7 |

### (Flavor Evaluation of Soft Cookie)

The soft cookie of Example 35 using the margarine of Example 33 served as a control for the soft cookie of Example 36 using the margarine of Example 34. According to the following evaluation criteria, five panelists skilled in evaluating the flavor of food products containing oils and fats rated the flavor when the soft cookie of Example 36 was placed in the mouth. The total score of the soft cookie of Example 36 was evaluated by summing the scores. The results are shown in Table 16.

| Evaluation criteria | Score |
|---|---|
| Vanilla-like sweet flavor isfelt stronger compared to the control, and has a lingering aftertaste | 2 points |
| Vanilla-like sweet flavor isfelt stronger compared to the control | 1 point |
| No change from the control | 0 points |
| Vanilla-like sweet flavor isfelt weaker compared to the control | 1 point |

| Comprehensive evaluation | |
|---|---|
| 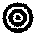 : 8 points or more and persistence | Excellent expression of vanilla-like sweet flavor |
| O: 5 points or more and 7 points or less like sweet flavor | Excellent expression of vanilla- |
| Δ: 2 points or more and 4 points or less | Difficult to discern the difference from the control |
| X: 1 point or less | There is no difference from the control, or the expression of vanilla-like sweet flavoris weak |

**[Table 16]**

| Table 16. Evaluation results of soft cookie | | |
|---|---|---|
| | Example 35 (control) | Example 36 |
| Margarine used | Example 33 | Example 34 |
| PGPR content of oils and fats contained in margarine (ppm by mass) | 0 | 6000 |
| PGPR content of soft cookie (ppm by mass) | 0 | 920 |
| Comprehensive evaluation | - | 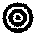 |

### <Evaluation 1 by Edible Oil and fat>

### (Preparation of Edible Oil and fat)

The edible oil and fat of Examples 37 to 40 were prepared according to the formulations in Table 17. That is, soybean oil (manufactured by Nisshin OilliO Group Co., Ltd.) containing 0.1% by mass of pork flavor (trade name: Backaroma Pork Oil CS1283, manufactured by Ogawa & Co., Ltd.) was used as the oils and fats of Example 37. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the oils and fats of Example 37 were heated and mixed at 60°C, and oils and fats (oils and fats of Example 38) containing 818H at a concentration of 0.5% by mass were obtained. The edible oil and fat of Examples 39 and 40 were prepared by appropriately diluting the oils and fats of Example 38 with the oils and fats of Example 37.

**[Table 17]**

| Table 17. Formulation and evaluation of edible oil and fat (values are % by mass) | | | | |
|---|---|---|---|---|
| | Example 37 | Example 38 | Example 39 | Example 40 |
| Oils and fats of Example 37 | 100 | 99.5 | 99.9 | 99.99 |
| 818H | 0 | 0.5 | 0.1 | 0.01 |
| Total | 100 | 100 | 100 | 100 |
| Evaluation results | - | 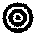 | 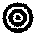 | O |

### (Flavor Evaluation of Edible Oil and fat)

The oils and fats of Example 37 served as a control. According to the evaluation criteria described in <Screening of Emulsifier> (Evaluation of Flavored Oil and fat Containing Emulsifier), five panelists skilled in evaluating the flavor of oils and fats rated the flavor when the oils and fats of Examples 38 to 40 were placed in the mouth. The oils and fats of Examples 38 to 40 were comprehensively evaluated by summing the scores. The results are shown in Table 17.

### <Measurement of Interfacial Tension Against Water>

The interfacial tension against water at 37°C was measured for the oils and fats of Examples 37 to 40 above. A contact angle meter DMo-502 (manufactured by Kyowa Interface Science Co., Ltd.) was used as the interfacial tension measurement device, and measurement was performed by the hanging drop method in which water is used as the outer phase of the cell and oil is pushed upward from a syringe to form droplets. The Young-Laplace equation was used as the equation for conversion to interfacial tension. Interfacial tension (mN/m) adopted the value 120 seconds after the start of measurement. Based on the interfacial tension of the oils and fats of Example 37 against water, the value of interfacial tension of each of the oils and fats of Examples 38 to 40 was subtracted from the value of interfacial tension of the oils and fats of Example 37, and a value (mN/m/% by mass) was obtained by dividing the difference by the concentration (% by mass) of PGPR (818H) contained in each of the oils and fats of Examples 38 to 40. The results are shown in Table 18.

In the above <Screening of Emulsifier>, regarding the emulsifier of CRS-75, which was found to have a flavor persistence effect, and each of O-30V, No.623M, and O-50D, which were not found to have a flavor persistence effect, soybean oil (manufactured by Nisshin OilliO Group Co., Ltd.) containing 0.1% by mass of pork flavor (trade name: Backaroma Pork Oil CS1283, manufactured by Ogawa & Co., Ltd.) adjusted to each concentration of 0.5% by mass, 0.1% by mass, and 0.01% by mass was prepared. The interfacial tension against water of the flavor-containing soybean oil containing each emulsifier at each concentration was measured in the same manner as the oils and fats of Examples 38 to 40. The value of interfacial tension of the flavor-containing soybean oil containing each emulsifier at each concentration is subtracted from the value of the interfacial tension of the oils and fats of Example 37, and a value (interfacial tension index: mN/m/% by mass) was obtained by dividing the difference by the concentration (% by mass) of the emulsifier contained in each of the oils and fats. The results are shown in Table 18.

**[Table 18]**

| Table 18. Interfacial tension index of each emulsifier: (values are mN/m/% by mass) | | | |
|---|---|---|---|
| | 0.5% by mass | 0.1% by mass | 0.01% by mass |
| 818H (Examples 38 to 40) | 47 | 125 | 160 |
| CRS-75 | 47 | 151 | 160 |
| O-30V | 13 | 19 | 0 |
| No.623M | Not measurable | 280 | 830 |
| O-50D | Not measurable | 255 | 450 |

| | | | |
|---|---|---|---|
| *; "Not measurable" because the water/oil interface for measurement was not formed. | | | |

### <Evaluation 2 by Edible Oil and fat>

### (Preparation of Edible Oil and fat)

The edible oil and fat of Examples 41 to 46 were prepared according to the formulations in Table 19. That is, extra virgin olive oil (trade name: Bosco extra virgin olive oil, manufactured by Nisshin OilliO Group Co., Ltd.), which is undistilled oil, was used as the oils and fats of Example 41. 1 part by mass of hexaglycerin condensed ricinoleic acid ester (trade name: Sunsoft 818H, abbreviation: 818H, manufactured by Taiyo Kagaku Co., Ltd.) and 99 parts by mass of the oils and fats of Example 41 were heated and mixed at 60°C, and oils and fats (oils and fats of Example 42) containing 818H at a concentration of 1% by mass were obtained. The edible oil and fat of Examples 43 to 46 were prepared by appropriately diluting the oils and fats of Example 42 with the oils and fats of Example 41.

**[Table 19]**

| Table 19. Formulation and evaluation of edible oil and fat (values are % by mass) | | | | | | |
|---|---|---|---|---|---|---|
| | Example 41 | Example 42 | Example 43 | Example 44 | Example 45 | Example 46 |
| Olive oil | 100 | 99 | 99.5 | 99.9 | 99.95 | 99.99 |
| 818H | 0 | 1 | 0.5 | 0.1 | 0.05 | 0.01 |
| Total | 100 | 100 | 100 | 100 | 100 | 100 |
| Evaluation results | - | 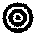 | 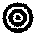 | 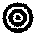 | 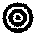 | O |

### (Flavor Evaluation of Edible Oil and fat)

The oils and fats of Example 41 served as a control. According to the following evaluation criteria, five panelists skilled in evaluating the flavor of oils and fats rated the flavor when the oils and fats of Examples 42 to 46 were placed in the mouth. The oils and fats of Examples 42 to 46 were comprehensively evaluated by summing the scores. The results are shown in Table 19.

| Evaluation criteria | Score |
|---|---|
| Flavor of olive oil is strongerand more persistent compared to the control | 2 points |
| Flavor of olive oil is more persistent compared to the control | 1 points |
| No change from the control | 0 points |
| Milky flavor is felt moreunfavorable compared to control | -1 point |

| Comprehensive evaluation | |
|---|---|
| 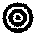 : 8 points or more | Extremely excellent flavor persistence |
| O: 5 points or more and 7 points or less | Excellent flavor persistence |
| Δ: 2 points or more and 4 points or less | Difficult to discern the difference from the control |
| X: 1 point or less | There is no difference from the control, or flavor is |
| unfavorable | |

### <Evaluation 3 by Edible Oil and fat>

### (Preparation of Edible Oil and fat)

The edible oil and fat of Examples 41 and 47 to 50 were prepared according to the formulations in Table 20. That is, in addition to the oils and fats of Example 41 above, the mixed oil and fat obtained by mixing the oils and fats of Example 41 and rapeseed oil (trade name: Nisshin canola oil, manufactured by Nisshin OilliO Group Co., Ltd.) at mass ratios of 100:0, 80:20, 60:40, and 40:60, respectively, and hexaglycerin condensed ricinoleic acid ester (trade name: Sunsoft 818H, abbreviation: 818H, manufactured by Taiyo Kagaku Co., Ltd.) were heated and mixed at a mass ratio of 99.96:0.04, and oils and fats containing 818H (oils and fats of Examples 47 to 50) with a concentration of 0.04% by mass (400 ppm by mass) was prepared.

**[Table 20]**

| Table 20. Formulation and evaluation of edible oil and fat | | | | | |
|---|---|---|---|---|---|
| | Example 41 | Example 47 | Example 48 | Example 49 | Example 50 |
| Mixing ratio (mass ratio) of olive oil and rapeseed oil | 100:0 | 100:0 | 80:20 | 60:40 | 40:60 |
| Mixed oil and fat (% by mass) | 100 | 99.96 | 99.96 | 99.96 | 99.96 |
| 818H (% by mass) | 0 | 0.04 | 0.04 | 0.04 | 0.04 |
| Total | 100 | 100 | 100 | 100 | 100 |
| Evaluation results | - | 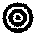 | O | Δ | X |

### (Flavor Evaluation of Edible Oil and fat)

The oils and fats of Example 41 served as a control. According to the evaluation criteria similar to those of <Evaluation 2 by Edible Oil and fat>, five panelists skilled in evaluating the flavor of oils and fats rated the flavor when the oils and fats of Examples 47 to 50 were placed in the mouth. The oils and fats of Examples 47 to 50 were comprehensively evaluated by summing the scores. The results are shown in Table 20.

### <Evaluation 4 by Edible Oil and fat>

### (Preparation of Edible Oil and fat)

The edible oil and fat of Examples 51 to 56 were prepared according to the formulations in Table 21. That is, extra virgin olive oil (trade name: Bosco extra virgin olive oil, manufactured by Nisshin OilliO Group Co., Ltd.) and rapeseed oil (trade name: Nisshin Canola Oil, manufactured by Nisshin OilliO Group Co., Ltd.) were mixed at a mass ratio of 10:90, and the oils and fats of Example 51 were obtained. 1 part by mass of hexaglycerin condensed ricinoleic acid ester (trade name: Sunsoft 818H, abbreviation: 818H, manufactured by Taiyo Kagaku Co., Ltd.) and 99 parts by mass of the oils and fats of Example 51 were heated and mixed at 60°C, and oils and fats (oils and fats of Example 52) containing 818H at a concentration of 1% by mass were obtained. The edible oil and fat of Examples 53 to 56 were prepared by appropriately diluting the oils and fats of Example 52 with the oils and fats of Example 51.

**[Table 21]**

| Table 21. Formulation and evaluation of edible oil and fat (values are % by mass) | | | | | | |
|---|---|---|---|---|---|---|
| | Exampl e 51 | Exampl e 52 | Exampl e 53 | Exampl e 54 | Exampl e 55 | Exampl e 56 |
| Oils and fats of Example 51 | 100 | 99 | 99.5 | 99.9 | 99.95 | 99.99 |
| 818H | 0 | 1 | 0.5 | 0.1 | 0.05 | 0.01 |
| Total | 100 | 100 | 100 | 100 | 100 | 100 |
| Evaluation results | - | 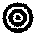 | 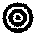 | 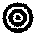 | 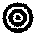 | O |

### (Flavor Evaluation of Edible Oil and fat)

The oils and fats of Example 51 served as a control. According to the evaluation criteria similar to those of <Evaluation 2 by Edible Oil and fat>, five panelists skilled in evaluating the flavor of oils and fats rated the flavor when the oils and fats of Examples 52 to 56 were placed in the mouth. The oils and fats of Examples 52 to 56 were comprehensively evaluated by summing the scores. The results are shown in Table 21.

### <Evaluation 5 by Edible Oil and fat>

### (Preparation of Edible Oil and fat)

The edible oil and fat of Examples 51 and 57 to 60 were prepared according to the formulations in Table 22. That is, extra virgin olive oil (trade name: Bosco extra virgin olive oil, manufactured by Nisshin OilliO Group Co.. Ltd.) and rapeseed oil (trade name: Nisshin Canola Oil, manufactured by Nisshin OilliO Group Co., Ltd.) were mixed at a mass ratio of 10:90, and the oils and fats of Example 51 were obtained. Similarly, mixed oil and fat mixed at a mass ratio of 10:90, 7:93, 5:95, and 3:97, respectively, and hexaglycerin condensed ricinoleic acid ester (trade name: Sunsoft 818H, abbreviation: 818H, manufactured by Taiyo Chemical Co., Ltd.) were heated and mixed at a mass ratio of 99.6:0.4, and oils and fats (oils and fats of Examples 57 to 60) containing 818H at a concentration of 0.4% by mass (4000 ppm by mass) was prepared.

**[Table 22]**

| Table 22. Formulation and evaluation of edible oil and fat | | | | | |
|---|---|---|---|---|---|
| | Example 51 | Example 57 | Example 58 | Example 59 | Example 60 |
| Mixing ratio (mass ratio) of olive oil and rapeseed oil | 10:90 | 10:90 | 7:93 | 5:95 | 3:97 |
| Mixed oil and fat (% by mass) | 100 | 99.6 | 99.6 | 99.6 | 99.6 |
| 818H (% by mass) | 0 | 0.4 | 0.4 | 0.4 | 0.4 |
| Total | 100 | 100 | 100 | 100 | 100 |
| Evaluation results | - | 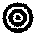 | O | Δ | X |

### (Flavor Evaluation of Edible Oil and fat)

The oils and fats of Example 51 served as a control. According to the evaluation criteria similar to those of <Evaluation 2 by Edible Oil and fat>, five panelists skilled in evaluating the flavor of oils and fats rated the flavor when the oils and fats of Examples 57 to 60 were placed in the mouth. The oils and fats of Examples 57 to 60 were comprehensively evaluated by summing the scores. The results are shown in Table 22.

### <Evaluation 6 by Edible Oil and fat>

### (Preparation of Edible Oil and fat)

The edible oil and fat of Examples 61 to 66 were prepared according to the formulations in Table 23. That is, the roasted sesame oil (trade name: Nisshin pure sesame oil, manufactured by Nisshin OilliO Group Co., Ltd., Lovibond colorimetric value 220 in paragraph 0021), which is undistilled oil, was used as the oils and fats of Example 61. 1 part by mass of hexaglycerin condensed ricinoleic acid ester (trade name: Sunsoft 818H, abbreviation: 818H, manufactured by Taiyo Kagaku Co., Ltd.) and 99 parts by mass of the oils and fats of Example 61 were heated and mixed at 60°C, and oils and fats (oils and fats of Example 62) containing 818H at a concentration of 1% by mass were obtained. The edible oil and fat of Examples 63 to 66 were prepared by appropriately diluting the oils and fats of Example 62 with the oils and fats of Example 61.

**[Table 23]**

| Table 23. Formulation and evaluation of edible oil and fat (values are by mass) | | | | | | |
|---|---|---|---|---|---|---|
| | Example 61 | Example 62 | Example 63 | Example 64 | Example 65 | Example 66 |
| Roasted sesame oil | 100 | 99 | 99.5 | 99.9 | 99.95 | 99.99 |
| 818H | 0 | 1 | 0.5 | 0.1 | 0.05 | 0.01 |
| Total | 100 | 100 | 100 | 100 | 100 | 100 |
| Evaluation results | - | 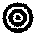 | 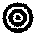 | 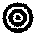 | 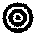 | O |

### (Flavor Evaluation of Edible Oil and fat)

The oils and fats of Example 61 served as a control. According to the following evaluation criteria, five panelists skilled in evaluating the flavor of oils and fats rated the flavor when the oils and fats of Examples 62 to 66 were placed in the mouth. The oils and fats of Examples 62 to 66 were comprehensively evaluated by summing the scores. The results are shown in Table 23.

| Evaluation criteria | Score |
|---|---|
| Flavor of roasted sesame oilis stronger and more persistent compared to the control | 2 points |
| Flavor of roasted sesame oilis more persistent compared to the control | 1 points |
| No change from the control | 0 points |
| Milky flavor is felt moreunfavorable compared to control | -1 point |

| Comprehensive evaluation | |
|---|---|
| ⊚: 8 points or more | Extremely excellent flavor persistence |
| O: 5 points or more and 7 points or less | Excellent flavor persistence |
| Δ: 2 points or more and | 4 points or less Difficult to discern the difference from the control |
| : 1 point or less | There is no difference from the control, or flavor is unfavorable |

### <Evaluation 7 by Edible Oil and fat>

### (Preparation of Edible Oil and fat)

The edible oil and fat of Examples 61 and 67 to 70 were prepared according to the formulations in Table 24. That is, in addition to the oils and fats of Example 61 above, the mixed oil and fat obtained by mixing the oils and fats of Example 61 and rapeseed oil (trade name: Nisshin canola oil, manufactured by Nisshin OilliO Group Co., Ltd.) at mass ratios of 100:0, 80:20, 60:40, and 40:60, respectively, and hexaglycerin condensed ricinoleic acid ester (trade name: Sunsoft 818H, abbreviation: 818H, manufactured by Taiyo Kagaku Co., Ltd.) were heated and mixed at a mass ratio of 99.96:0.04, and oils and fats containing 818H (oils and fats of Examples 67 to 70) with a concentration of 0.04% by mass (400 ppm by mass) was prepared.

**[Table 24]**

| Table 24. Formulation and evaluation of edible oil and fat | | | | | |
|---|---|---|---|---|---|
| | Example 61 | Example 67 | Example 68 | Example 69 | Example 70 |
| Mixing ratio (mass ratio) of roasted sesame oil and rapeseed oil | 100:0 | 100:0 | 80:20 | 60:40 | 40:60 |
| Mixed oil and fat (% by mass) | 100 | 99.96 | 99.96 | 99.96 | 99.96 |
| 818H (% by mass) | 0 | 0.04 | 0.04 | 0.04 | 0.04 |
| Total | 100 | 100 | 100 | 100 | 100 |
| Evaluation results | - | 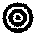 | O | Δ | X |

### (Flavor Evaluation of Edible Oil and fat)

The oils and fats of Example 61 served as a control. According to the evaluation criteria similar to those of <Evaluation 6 by Edible Oil and fat>, five panelists skilled in evaluating the flavor of oils and fats rated the flavor when the oils and fats of Examples 67 to 70 were placed in the mouth. The oils and fats of Examples 67 to 70 were comprehensively evaluated by summing the scores. The results are shown in Table 24.

### <Evaluation 8 by Edible Oil and fat>

### (Preparation of Edible Oil and fat)

The edible oil and fat of Examples 71 to 76 were prepared according to the formulations in Table 25. That is, the roasted sesame oil (trade name: Nisshin pure sesame oil, manufactured by Nisshin OilliO Group Co., Ltd., Lovibond colorimetric value 220 in paragraph 0021) and rapeseed oil (trade name: Nisshin canola oil. manufactured by Nisshin OilliO Group Co., Ltd.) were mixed at a mass ratio of 10:90, and the oils and fats of Example 71 were obtained. 1 part by mass of hexaglycerin condensed ricinoleic acid ester (trade name: Sunsoft 818H, abbreviation: 818H, manufactured by Taiyo Kagaku Co., Ltd.) and 99 parts by mass of the oils and fats of Example 71 were heated and mixed at 60°C, and oils and fats (oils and fats of Example 72) containing 818H at a concentration of 1% by mass were obtained. The edible oil and fat of Examples 73 to 76 were prepared by appropriately diluting the oils and fats of Example 72 with the oils and fats of Example 71.

**[Table 25]**

| Table 25. Formulation and evaluation of edible oil and fat (values are by mass) | | | | | | |
|---|---|---|---|---|---|---|
| | Example 71 | Example 72 | Example 73 | Example 74 | Example 75 | Example 76 |
| Oils and fats of Example 71 | 100 | 99 | 99.5 | 99.9 | 99.95 | 99.99 |
| 818H | 0 | 1 | 0.5 | 0.1 | 0.05 | 0.01 |
| Total | 100 | 100 | 100 | 100 | 100 | 100 |
| Evaluation results | - | 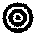 | 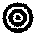 | 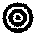 | 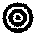 | O |

### (Flavor Evaluation of Edible Oil and fat)

The oils and fats of Example 71 served as a control. According to the evaluation criteria similar to those of <Evaluation 6 by Edible Oil and fat>, five panelists skilled in evaluating the flavor of oils and fats rated the flavor when the oils and fats of Examples 72 to 76 were placed in the mouth. The oils and fats of Examples 72 to 76 were comprehensively evaluated by summing the scores. The results are shown in Table 25.

### <Evaluation 9 by Edible Oil and fat>

### (Preparation of Edible Oil and fat)

The edible oil and fat of Examples 71 and 77 to 80 were prepared according to the formulations in Table 26. That is, the roasted sesame oil (trade name: Nisshin pure sesame oil, manufactured by Nisshin OilliO Group Co., Ltd., Lovibond colorimetric value 220 in paragraph 0021) and rapeseed oil (trade name: Nisshin canola oil, manufactured by Nisshin OilliO Group Co., Ltd.) were mixed at a mass ratio of 10:90, and the oils and fats of Example 71 were obtained. Similarly, mixed oil and fat mixed at a mass ratio of 10:90, 7:93, 5:95, and 3:97, respectively, and hexaglycerin condensed ricinoleic acid ester (trade name: Sunsoft 818H. abbreviation: 818H, manufactured by Taiyo Chemical Co., Ltd.) were heated and mixed at a mass ratio of 99.8:0.2, and oils and fats (oils and fats of Examples 77 to 80) containing 818H at a concentration of 0.2% by mass (2000 ppm by mass) was prepared.

**[Table 26]**

| Table 26. Formulation and evaluation of edible oil and fat | | | | | |
|---|---|---|---|---|---|
| | Example 71 | Example 77 | Example 78 | Example 79 | Example 80 |
| Mixing ratio (mass ratio) of roasted sesame oil and rapeseed oil | 10:90 | 10:90 | 7:93 | 5:95 | 3:97 |
| Mixed oil and fat (% by mass) | 100 | 99.8 | 99.8 | 99.8 | 99.8 |
| 818H (% by mass) | 0 | 0.2 | 0.2 | 0.2 | 0.2 |
| Total | 100 | 100 | 100 | 100 | 100 |
| Evaluation results | - | 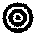 | O | Δ | X |

### (Flavor Evaluation of Edible Oil and fat)

The oils and fats of Example 71 served as a control. According to the evaluation criteria similar to those of <Evaluation 6 by Edible Oil and fat>, five panelists skilled in evaluating the flavor of oils and fats rated the flavor when the oils and fats of Examples 77 to 80 were placed in the mouth. The oils and fats of Examples 77 to 80 were comprehensively evaluated by summing the scores. The results are shown in Table 26.

### <Evaluation 10 by Edible Oil and fat>

### (Preparation of Edible Oil and fat)

The edible oil and fat of Examples 81 to 83 were prepared according to the formulations in Table 27. That is, peanut oil (trade name: YOUKI peanut oil, manufactured by Yuuki Foods Co., Ltd.) was used as the oils and fats of Example 81. 0.3 parts by mass of hexaglycerin condensed ricinoleic acid ester (trade name: Sunsoft 818H, abbreviation: 818H, manufactured by Taiyo Kagaku Co., Ltd.) and 99.7 parts by mass of the oils and fats of Example 81 were heated and mixed at 60°C, and oils and fats containing 818H at a concentration of 3000 ppm by mass (for example, oils and fats of Example 82) were obtained. The edible oil and fat of Example 83 were prepared by diluting the oils and fats of Example 82 by 1/10 with the oils and fats of Example 81. In addition, the edible oil and fat of Examples 84 to 86 were prepared according to the formulations in Table 27. That is, peanut oil (trade name: YOUKI peanut oil, manufactured by Yuuki Foods Co., Ltd.) and high oleic sunflower oil (trade name: Nisshin Sunflower Oil (S), manufactured by Nisshin Oillio Group Co., Ltd.) were mixed at a mass ratio of 5:95, and the oils and fats of Example 84 were obtained. 0.3 parts by mass of hexaglycerin condensed ricinoleic acid ester (trade name: Sunsoft 818H, abbreviation: 818H, manufactured by Taiyo Kagaku Co., Ltd.) and 99.7 parts by mass of the oils and fats of Example 84 were heated and mixed at 60°C, and oils and fats containing 818H at a concentration of 3000 ppm by mass (for example, oils and fats of Example 85) were obtained. The edible oil and fat of Example 86 were prepared by diluting the oils and fats of Example 85 by 1/10 with the oils and fats of Example 84.

**[Table 27]**

| Table 27. Formulation and evaluation of edible oil and fat (values are by mass) | | | | | | |
|---|---|---|---|---|---|---|
| | Example 81 | Example 82 | Example 83 | Example 84 | Example 85 | Example 86 |
| Peanut oil | 100 | 99.7 | 99.97 | | | |
| Oils and fats of Example 84 | | | | 100 | 99.7 | 99.97 |
| 818H | 0 | 0.3 | 0.03 | 0 | 0.3 | 0.03 |
| Total | 100 | 100 | 100 | 100 | 100 | 100 |
| Evaluation results | - | 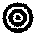 | 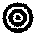 | - | 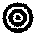 | O |

### (Flavor Evaluation of Edible Oil and fat)

Using the oils and fats of Example 81 as a control, according to the following evaluation criteria, five panelists skilled in evaluating the flavor of oils and fats rated the flavor when the oils and fats of Examples 82 to 83 were placed in the mouth. The oils and fats of Examples 82 to 83 were comprehensively evaluated by summing the scores. The results are shown in Table 27. Similarly, using the oils and fats of Example 84 as a control, the flavor of the oils and fats of Examples 85 and 86 when being placed in the mouth was rated. The oils and fats of Examples 85 to 86 were comprehensively evaluated by summing the scores. The results are shown in Table 27.

| Evaluation criteria | Score |
|---|---|
| Flavor of peanut oil is stronger and more persistent compared to the control | 2 points |
| Flavor of peanut oil is more persistent compared to the control | 1 points |
| No change from the control | 0 points |
| Milky flavor is felt more unfavorable compared to control | -1 point |

| Comprehensive evaluation 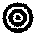 | |
|---|---|
| : 8 points or more | Extremely excellent flavor persistence |
| O: 5 points or more and 7 points or less | Excellent flavor persistence |
| Δ: 2 points or more and 4 points or less | Difficult to discern the difference from the control |
| X: 1 point or less | There is no difference from the control, or flavor is unfavorable |

### <Evaluation 11 by Edible Oil and fat>

### (Preparation of Edible Oil and fat)

The edible oil and fat of Examples 87 to 89 were prepared according to the formulations in Table 28. That is, milk fat (butter oil, manufactured by Morinaga Milk Industry Co., Ltd.) was used as the oils and fats of Example 87. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the oils and fats of Example 87 were heated and mixed at 60°C, and oils and fats containing 818H at a concentration of 5000 ppm by mass (for example, oils and fats of Example 88) were obtained. The edible oil and fat of Example 89 were prepared by diluting the oils and fats of Example 88 by 1/10 with the oils and fats of Example 87. In addition, the edible oil and fat of Examples 90 to 92 were prepared according to the formulations in Table 28. That is, milk fat (butter oil, manufactured by Morinaga Milk Industry Co., Ltd.) and PMF (palm oil intermediate melting point fraction, manufactured by Nisshin Oillio Group Co., Ltd.) were mixed at a mass ratio of 5:95, and the oils and fats of Example 90 were obtained. 0.5 parts by mass of hexaglycerin condensed ricinoleic acid ester (trade name: Sunsoft 818H, abbreviation: 818H, manufactured by Taiyo Kagaku Co., Ltd.) and 99.5 parts by mass of the oils and fats of Example 90 were heated and mixed at 60°C, and oils and fats containing 818H at a concentration of 5000 ppm by mass (for example, oils and fats of Example 91) were obtained. The edible oil and fat of Example 92 were prepared by diluting the oils and fats of Example 91 by 1/10 with the oils and fats of Example 90.

**[Table 28]**

| Table 28. Formulation and evaluation of edible oil and fat (values are % by mass) | | | | | | |
|---|---|---|---|---|---|---|
| | Example 87 | Example 88 | Example 89 | Example 90 | Example 91 | Example 92 |
| Milk fat | 100 | 99.5 | 99.95 | | | |
| Oils and fats of Example 90 | | | | 100 | 99.5 | 99.95 |
| 818H | 0 | 0.5 | 0.05 | 0 | 0.5 | 0.05 |
| Total | 100 | 100 | 100 | 100 | 100 | 100 |
| Evaluation results | - | 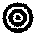 | 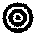 | - | 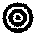 | O |

### (Flavor Evaluation of Edible Oil and fat)

Using the oils and fats of Example 87 as a control, according to the following evaluation criteria, five panelists skilled in evaluating the flavor of oils and fats rated the flavor when the oils and fats of Examples 88 and 89 were placed in the mouth. The oils and fats of Examples 88 and 89 were comprehensively evaluated by summing the scores. The results are shown in Table 28. Similarly, using the oils and fats of Example 90 as a control, the flavor of the oils and fats of Examples 91 and 92 when being placed in the mouth was rated. The oils and fats of Examples 91 and 92 were comprehensively evaluated by summing the scores. The results are shown in Table 28.

| Evaluation criteria | Score |
|---|---|
| Flavor of milk fat is stronger and more persistent compared to the control | 2 points |
| Flavor of milk fat is more persistent compared to the control | 1 points |
| No change from the control | 0 points 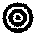 |
| Milky flavor is felt more unfavorable compared to control | -1 point |

| Comprehensive evaluation | |
|---|---|
| : 8 points or more | Extremely excellent flavor persistence |
| O: 5 points or more and 7 points or less | Excellent flavor persistence |
| Δ: 2 points or more and 4 points or less | Difficult to discern the difference from the control |
| X: 1 point or less | There is no difference from the control, or flavor is unfavorable |

## Claims

1. Use of polyglycerol polyricinoleate for improving the persistence of flavor in a food and beverage product.

2. The use according to claim 1, wherein
a degree of polymerization of polyglycerin in the polyglycerol polyricinoleate is 2 to 10.

3. The use according to claim 1 or 2, wherein
the food and beverage product has a sweet and/or salty flavor.

4. The use according to any one of claims 1 to 3, wherein
the food and beverage product comprises an edible oil and fat.

5. The use according to claim 4, wherein
the food and beverage product is an emulsion.

6. The use according to claim 4 or 5, wherein polyglycerol polyricinoleate is applied to the edible oil and fat contained in the food and beverage product.

7. The use according to claim 6, wherein
a value obtained by dividing a decrease (mN/m) in interfacial tension against water due to incorporation of polyglycerol polyricinoleate for improving the persistence of flavor in the edible oil and fat by a content (% by mass) of polyglycerol polyricinoleate is 30 to 200 (mN/m/% by mass),
the decrease is obtained by subtracting a value of the interfacial tension against water in the edible oil and fat containing polyglycerol polyricinoleate from a value of the interfacial tension against water in an edible oil and fat without polyglycerol polyricinoleate,
the content of polyglycerol polyricinoleate is 0.01 to 0.5% by mass in the food and beverage product, and
the value of the interfacial tension against water is obtained 120 seconds after the start of measurement is stable at 37°C.

## Patentansprüche

1. Verwendung von Polyglycerin-Polyricinoleat zur Verbesserung der Geschmacksbeständigkeit in einem Lebensmittel- und Getränkeprodukt.

2. Verwendung nach Anspruch 1, wobei
der Polymerisationsgrad von Polyglycerin in dem Polyglycerin-Polyricinoleat 2 bis 10 beträgt.

3. Verwendung nach Anspruch 1 oder 2, wobei
das Lebensmittel- und Getränkeprodukt einen süßen und / oder salzigen Geschmack aufweist.

4. Verwendung nach einem der Ansprüche 1 bis 3, wobei
das Lebensmittel- und Getränkeprodukt ein essbares Öl und Fett umfasst.

5. Verwendung nach Anspruch 4, wobei
das Lebensmittel- und Getränkeprodukt eine Emulsion ist.

6. Verwendung nach Anspruch 4 oder 5, wobei Polyglycerin-Polyricinoleat auf das in dem Lebensmittel- und Getränkeprodukt enthaltene essbare Öl und Fett aufgebracht wird.

7. Verwendung nach Anspruch 6, wobei
ein Wert, der durch Division einer Abnahme (mN/m) der Grenzflächenspannung gegenüber Wasser aufgrund der Einarbeitung von Polyglycerin-Polyricinoleat zur Verbesserung der Geschmacksbeständigkeit in dem essbaren Öl und Fett durch einen Gehalt (Massenprozent) an Polyglycerin-Polyricinoleat erhalten wird, 30 bis 200 (mN/m/Massenprozent) beträgt,
die Abnahme durch Subtraktion eines Wertes der Grenzflächenspannung gegenüber Wasser in dem essbaren Öl und Fett, das Polyglycerin-Polyricinoleat enthält, von einem Wert der Grenzflächenspannung gegenüber Wasser in einem essbaren Öl und Fett ohne Polyglycerin-Polyricinoleat erhalten wird,
der Gehalt an Polyglycerin-Polyricinoleat in dem Lebensmittel- und Getränkeprodukt 0,01 bis 0,5 Massenprozent beträgt, und
der Wert der Grenzflächenspannung gegenüber Wasser 120 Sekunden nach Beginn der Messung bei 37 °C stabil ist.

## Revendications

1. Utilisation du polyricinoléate de polyglycérol pour améliorer la persistance de la saveur dans un produit alimentaire ou une boisson.

2. Utilisation selon la revendication 1, dans laquelle le degré de polymérisation du polyglycérol dans le polyricinoléate de polyglycérol est compris entre 2 et 10.

3. Utilisation selon la revendication 1 ou 2, dans laquelle le produit alimentaire et boisson a une saveur sucrée et/ou salée.

4. Utilisation selon l'une quelconque des revendications 1 à 3, dans laquelle
le produit alimentaire et boisson comprend une huile et une graisse comestibles.

5. Utilisation selon la revendication 4, dans laquelle le produit alimentaire et la boisson sont une émulsion.

6. Utilisation selon la revendication 4 ou 5, dans laquelle le polyricinoléate de polyglycérol est appliqué à l'huile et à la graisse comestibles contenues dans le produit alimentaire et la boisson.

7. Utilisation selon la revendication 6, dans laquelle
une valeur obtenue en divisant une diminution (mN/m) de la tension interfaciale par rapport à l'eau due à l'incorporation de polyricinoléate de polyglycérol pour améliorer la persistance de la saveur dans l'huile et la graisse comestibles par une teneur (% en masse) en polyricinoléate de polyglycérol est comprise entre 30 et 200 (mN/m/% en masse),
la diminution est obtenue en soustrayant une valeur de la tension interfaciale par rapport à l'eau dans l'huile et la graisse comestibles contenant du polyricinoléate de polyglycérol d'une valeur de la tension interfaciale par rapport à l'eau dans une huile et une graisse comestible sans polyricinoléate de polyglycérol,
la teneur en polyricinoléate de polyglycérol est comprise entre 0,01 et 0,5 % en masse dans le produit alimentaire ou la boisson, et
la valeur de la tension interfaciale par rapport à l'eau est obtenue 120 secondes après le début de la mesure, à une température stable de 37 °C.
